# DEMANDE DE BREVET EUROPEEN

(11) **EP 4 524 110 A1**
(43) Date de publication de la demande: **19.03.2025**
(21) Numéro de dépôt: 24197025.0
(22) Date de dépôt: 28.08.2024
(51) Int. Cl.: C02F 1/00, B01D 21/00, E03F 5/14, E03F 5/04, E03F 5/22, C02F 3/12, C02F 3/28

(54) **DISPOSITIF DE FILTRATION D´EAUX USÉES POUR INSTALLATION D´ ASSAINISSEMENT NON COLLECTIF**

(30) Priorité: 14.09.2023 FR 2309690
(71) Demandeur: Innoclair, 56700 Kervignac (FR)
(72) Inventeur: RAULT, Hugues, 56700 Kervignac (FR)
(74) Mandataire: Lequien, Philippe

(57) **Abrégé**

L'invention concerne un dispositif (1) de filtration pour la filtration d'eaux usées, le dispositif (1) comprenant :
- une cuve (2) de filtration préfabriquée comprenant un fond (21) présentant une surface interne (210) à la cuve (2) ;
- au moins un étage de filtration (4) situé dans la cuve (2) de filtration ;
- une pompe (6) de relevage installée dans la cuve (2) de filtration ;
dans lequel la surface interne du fond (21) comprend :
- une section de relevage (212) sur laquelle est installée la pompe (6) de relevage ;
- une section de collecte (211) comprenant au moins une rigole (5) d'écoulement gravitaire s'étendant longitudinalement vers la section de relevage (212),
la section de relevage (212) étant située en hauteur plus bas que la section de collecte (211).

## Description

Le domaine de l'invention concerne la conception et la fabrication des équipements de traitement des eaux usées. Plus précisément, l'invention concerne un dispositif de filtration d'eaux usées, du type intégrant une cuve de filtration destinée à recevoir des eaux usées prétraitées par une fosse septique.

Dans le cas d'un assainissement non collectif, on distingue les habitations reliées au réseau de collecte de leur commune et celles qui ne le sont pas. Les habitations non reliées au réseau de collecte sont généralement équipées d'une fosse septique pour le traitement des eaux usées domestiques (hors eaux pluviales) associée à un système de filtration tel qu'un bac à sable filtrant.

Il existe également des cuves, dites cuves de filtration, qui sont couplées à des fosses septiques dans lesquelles sont prétraitées les eaux usées.

Une telle cuve de filtration comprend un volume interne à l'intérieur duquel des eaux usées sont apportées pour être filtrées par au moins un étage de filtration, comprenant un média filtrant, situé à l'intérieur de la cuve de filtration.

Une pompe de relevage installée dans la cuve de filtration, sur le fond de cette dernière, est destinée à aspirer les eaux filtrées pour les évacuer. Il est à noter que, hormis le média filtrant, ces cuves sont ainsi la plupart du temps partiellement vide d'eau.

Une installation non collective de traitement d'eaux usées peut classiquement comprendre des cuves préfabriquées destinées à être enterrées dans des fosses.

Les cuves peuvent être préfabriquées en béton, ou en plastique.

Les cuves en béton présentent ainsi un poids particulièrement important, et impliquent des contraintes pour leur transport et leur installation relatives à ce poids. Néanmoins elles présentent une résistance structurelle importante et une capacité naturelle, du fait de leur poids, à résister à la pression d'Archimède si de l'eau envahie la cavité dans laquelle elles sont enterrées.

Les cuves en plastique sont ainsi plus faciles à transporter et à installer.

Toutefois, elles sont soumises à des contraintes spécifiques résultant du volume qu'elles occupent, et de la résistance ainsi que la densité plus faible du matériau plastique par rapport à un matériau plus résistant et dense, tel que le béton.

En effet, en étant la plupart du temps partiellement vide d'eau, et du fait qu'elles sont enterrées dans des fosses et recouvertes par un matériau de comblement, des cuves « légères » en matériau plastique peuvent avoir tendance à ressortir de terre sous l'effet d'une submersion de la fosse, ou de la présence d'une nappe phréatique, et des contraintes exercées par les eaux selon le principe de la poussée d'Archimède. Des mesures palliatives doivent ainsi être mises en oeuvre pour ces cuves, telles que celles notamment décrites dans les documents de brevet publiés sous les numéros FR2999625 et FR3122101.

Une problématique plus générale relative aux dispositifs de filtration comprenant une cuve préfabriquée réside dans l'encrassement de la cuve, des particules arrivant inexorablement à passer le filtre et s'accumulant au fond de la cuve.

Dans ce cas, il est alors nécessaire de réaliser une révision en profondeur de la cuve nécessitant une intervention lourde et coûteuse. Une telle intervention implique souvent l'entrée dans la cuve d'un opérateur qui, dans un contexte de gaz dangereux type hydroxyde de soufre et méthane, doit être pourvu d'équipements personnels de protection tel qu'un scaphandre.

L'invention a notamment pour objectif de pallier les inconvénients de l'art antérieur.

Plus précisément, l'invention a pour objectif de proposer un dispositif de filtration comprenant une cuve de filtration préfabriquée résolvant au moins partiellement la problématique liée à l'encrassement de la cuve.

L'invention a également pour objectif de proposer un tel dispositif qui ne nécessite pas une révision en profondeur aussi récurrente que ce qui peut être nécessaire avec les cuves comparables selon l'art antérieur.

Ces objectifs, ainsi que d'autres qui apparaitront par la suite, sont atteints grâce à l'invention qui a pour objet un dispositif de filtration d'installation d'assainissement non collectif pour la filtration d'eaux usées, le dispositif comprenant :
- une cuve de filtration préfabriquée comprenant un fond présentant une surface interne à la cuve, la cuve s'étendant en hauteur par rapport au fond, la cuve de filtration étant formée à partir d'une coque rigide en matériau plastique et/ou composite;
- au moins un étage de filtration situé dans la cuve de filtration ;
- une pompe de relevage installée dans la cuve de filtration ;
caractérisé en ce que la surface interne du fond comprend :
- une section de relevage sur laquelle est installée la pompe de relevage ;
- une section de collecte comprenant au moins une rigole d'écoulement gravitaire s'étendant longitudinalement vers la section de relevage,
la section de relevage étant située en hauteur plus bas que la section de collecte, et en ce qu'il comprend un piétement pour la cuve, le piétement délimitant un plan de pose de la cuve et ménageant un espace au-dessus du plan de pose dans lequel s'étend la rigole d'écoulement gravitaire, le piétement étant formé par la coque rigide de la cuve.

La cuve de filtration du dispositif selon l'invention est moins sujette à l'encrassement que les autres dispositifs selon l'art antérieur.

En effet, grâce à la rigole d'écoulement gravitaire orientée vers la section de relevage, les eaux d'écoulement filtrées par l'étage de filtration s'écoulent en direction de la section de relevage en charriant de potentielles particules ayant franchies l'étage de filtration. Les eaux filtrées se concentrent dans cette rigole d'écoulement pour parvenir jusqu'à la section de relevage. Les eaux filtrées sont ainsi susceptibles de créer un flux d'écoulement plus important dans cette rigole d'écoulement pour charrier des particules.

La forme de la surface interne du fond de la cuve optimise ainsi l'évacuation de particules grâce à l'eau filtrée qui s'écoule jusqu'à la pompe de relevage.

Tel que cela peut être compris, en cas de forte sollicitation du dispositif de filtration, et d'un fort débit d'eau filtrée, l'action de nettoyage par l'eau filtrée est renforcée. Plus l'eau s'écoule en grande quantité et rapidement sur la surface interne du fond de la cuve, et notamment dans la rigole d'écoulement, plus l'eau est capable de réaliser une action de récurage des particules s'accumulant sur cette surface interne du fond de la cuve et de charriage de ces particules en direction de la pompe de relevage située sur la section de relevage.

Grâce au piétement qui délimite un plan de pose de la cuve et qui ménage un espace au-dessus du plan de pose dans lequel s'étend la rigole d'écoulement gravitaire, la section de collecte de la surface interne du fond correspond alors à la partie de cette surface interne qui est la plus proche du plan de pose.

Dans ce cas, la rigole d'écoulement gravitaire et la section de collecte n'interfèrent pas avec la capacité de la cuve à reposer sur une surface plane, par exemple la surface d'un radier.

Avantageusement, la section de collecte comprend deux pans d'écoulements gravitaire encadrant la rigole d'écoulement gravitaire, chaque pan d'écoulement gravitaire étant incliné en direction de la rigole d'écoulement gravitaire.

Chaque pan d'écoulement gravitaire dirige ainsi les eaux filtrées s'écoulant le long de leur surface en direction de la rigole d'écoulement gravitaire. Les pans d'écoulement gravitaire participent ainsi à former un flux d'écoulement plus important au niveau de la rigole d'écoulement gravitaire.

Préférentiellement, le dispositif comprend un plancher drainant surplombant la rigole d'écoulement gravitaire.

Ce plancher drainant, tout en formant un moyen de filtrer l'eau s'écoulant dans la cuve, forme également un moyen susceptible de retenir un média filtrant de l'étage de filtration, et d'éviter qu'il ne tombe dans la rigole d'évacuation.

Avantageusement, le plancher drainant ménage un volume libre entre lui et la rigole d'écoulement.

Un flux d'eau filtrée s'écoulant dans la rigole n'est ainsi pas perturbé.

Selon un mode de réalisation préféré, le plancher drainant repose sur la section de collecte de part et d'autre de la rigole d'écoulement, et la rigole d'écoulement présente une section transversale bombée vers l'extérieur de la cuve.

La rigole d'écoulement, de par sa forme et la présence du plancher drainant sus-jacent qui prend appui de part et d'autre de la rigole, présente alors une résistance renforcée contre des pressions externes s'exerçant contre la cuve au niveau de la rigole, par exemple celle résultant de l'envahissement par de l'eau de la fosse dans laquelle est enterrée la cuve.

Selon une variante préférée, le dispositif comprend des renforts verticaux logés dans la cuve et prenant appui sur le fond et sur une paroi supérieure de la cuve qui surplombe le fond.

La résistance de la cuve est ainsi renforcée.

Préférentiellement, au moins une partie des renforts verticaux prend appui sur le fond par l'intermédiaire du plancher drainant.

La résistance de la rigole d'écoulement est alors particulièrement renforcée.

Selon une conception préférée, le fond de la cuve au moins une membrane liée au moins partiellement à la coque rigide, et formant au moins partiellement la surface interne du fond de la cuve.

Grâce à cette conception, la surface interne du fond de la cuve n'est pas strictement dépendante de la forme de la coque rigide de la cuve. Il est ainsi possible à cette coque rigide de former des renforts tels que des raidisseurs, sans que ces renforts ne forment à l'intérieur de la cuve des espaces susceptibles de s'encrasser.

L'invention a également pour objet une installation d'assainissement non collectif, comprenant :
- une fosse ménagée dans un sol et présentant une base plane ;
- un dispositif de filtration tel que décrit précédemment, reposant sur la base plane ;
- un matériau de remblaiement remplissant la fosse autour du dispositif de filtration.

Cette installation présente les avantages obtenus grâce à la cuve selon l'invention telle que précédemment décrite.

D'autres caractéristiques et avantages de l'invention apparaîtront plus clairement à la lecture de la description suivante d'un mode de réalisation préférentiel de l'invention, donné à titre d'exemple illustratifs et non limitatif, et des dessins annexés parmi lesquels :
- la figure 1 est une vue latérale du dispositif selon l'invention ;
- la figure 2 est une vue latérale selon une coupe longitudinale médiane du dispositif selon l'invention ;
- la figure 3 est une vue en perspective d'un fond d'une cuve selon une coupe longitudinale médiane du dispositif selon l'invention ;
- la figure 4 est une vue en perspective d'un fond d'une cuve selon une coupe horizontale du dispositif selon l'invention ;
- la figure 5 est une vue de face de la cuve du dispositif selon l'invention ;
- la figure 6 est une vue de face du fond de la cuve selon une coupe transversale médiane du dispositif selon l'invention.

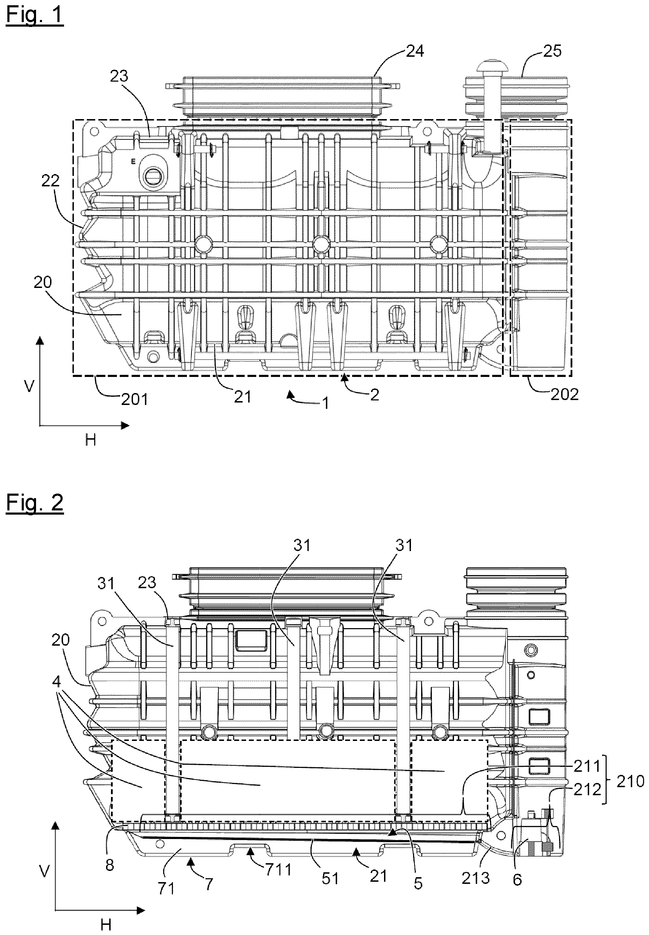

En référence aux figures 1 à 6, un dispositif 1 de filtration pour la filtration d'eaux usées est représenté.

Ce dispositif 1 comprend une cuve 2 de filtration préfabriquée.

Par l'expression « préfabriqué », il est entendu que la cuve n'est pas maçonnée sur son lieu d'installation, et qu'elle est conçue pour être fabriquée sur un lieu dédié de fabrication, puis transportée jusqu'à son lieu d'installation.

Cette cuve 2 de filtration est avantageusement formée à partir d'une coque 20 rigide en matériau plastique et/ou composite.

Par exemple, la cuve 2 est fabriquée par rotomoulage.

En référence aux figures 1, 2, et 5, la cuve 2 de filtration comprend :
- un fond 21 ;
- une paroi supérieure 23 ;
- une paroi périphérique 22 s'étendant depuis le fond 21 jusqu'à la paroi supérieure 23.

Tel que cela est détaillé par la suite, la cuve 2 est destinée à reposer sur une partie de sa coque 20 qui forme une partie du fond 21 de la cuve 2. La cuve 2 s'étend ainsi en hauteur depuis son fond 21.

A des fins de clartés, des repères spatiaux sont représentés sur les figures 1 et 2, ces repères comprennent un axe horizontal H, et un axe vertical V.

La position de la cuve 2, par rapport à ces repères spatiaux, correspond à la position de la cuve 2 une fois son installation terminée.

La cuve 2 comprend également un regard principal 24 et un regard secondaire 25.

Tel qu'illustré par la figure 1, la cuve 2 présente une partie principale 201 de filtration, et une partie secondaire 202 dédiée au relevage des eaux filtrées.

En référence à la figure 2, le dispositif 1 de filtration comprend au moins un étage de filtration 4 (illustré schématiquement) qui est situé dans la cuve 2 de filtration. Plus précisément, le dispositif 1 de filtration comprend un unique étage de filtration 4 qui est situé dans la partie principale 201 de filtration. Il est envisageable, selon d'autres modes de réalisation, que le dispositif 1 de filtration comprennent plusieurs étages de filtration, tel que deux ou trois étages de filtration.

Cet étage de filtration 4 peut par exemple être formé à partir de billes d'argile, de fibres végétales telles que des fibres de noix de coco, et présente une hauteur pouvant être de comprise de 30 centimètres à 1,5 mètres selon le matériau et le niveau d'exigence du traitement, et étant par exemple de l'ordre de 60 centimètres.

Bien que cela ne soit pas représenté, le dispositif 1 de filtration comprend également des moyens d'amenée d'eaux à filtrer conçus pour alimenter l'étape de filtration en eaux à filtrer.

Le dispositif 1 de filtration est notamment conçu pour être disposé en côté d'une cuve de traitement d'eaux usées dont les eaux traitées ressortant de ladite cuve sont destinées alimenter le dispositif 1 de filtration.

Tel qu'illustré par les figures 2 à 4, le dispositif 1 de filtration comprend encore une pompe 6 de relevage installée dans la cuve 2 de filtration.

En référence aux figures 2 à 4, et 6, le fond 21 présente une surface interne 210 à la cuve 2.

Cette surface interne 210 correspond à la surface qui délimite en partie basse le volume interne dans lequel sont traitées les eaux à filtrer, et collectées les eaux filtrées.

Cette surface interne 210 comprend :
- une section de relevage 212 sur laquelle est installée la pompe 6 de relevage ;
- une section de collecte 211.

La section de relevage 212 est située en hauteur plus bas que la section de collecte 211. De cette manière, les eaux filtrées collectées par la section de collecte 211 sont dirigées vers la section de relevage 212 pour y être pompées par la pompe 6 de relevage.

La section de collecte 211 correspond essentiellement à la surface interne 210 à l'aplomb de la partie principale 201de filtration de la cuve, tandis que la section de collecte 212 correspond essentiellement à la surface interne 210 à l'aplomb de la partie secondaire 202 de la cuve 2.

La section de collecte 211 comprend au moins une rigole 5 d'écoulement gravitaire s'étendant longitudinalement vers la section de relevage.

Par écoulement gravitaire, il est entendu que la rigole 5 présente au moins une pente par rapport à l'horizontal lorsque le dispositif est installé, cette pente permettant l'écoulement d'un liquide dans un sens prédéterminé sous l'effet de la gravité.

Selon un mode de réalisation envisageable, la section de collecte 211 peut comprendre une pluralité de rigoles 5 d'écoulement, par exemple s'étendant parallèlement les unes aux autres.

Selon le présent mode de réalisation, la section de collecte 211 comprend une unique rigole 5 d'écoulement gravitaire.

La rigole 5 d'écoulement gravitaire concentre les eaux filtrées et permet la création d'un flux d'eaux filtrées dirigé en direction de la section de relevage 212.

En référence à la figure 2, la rigole 5 d'écoulement présente une pente 51 supérieure ou égale à 1%, et inférieure ou égale à 20%, préférentiellement inférieure ou égale à 10 %, et encore plus préférentiellement inférieure ou égale à 5%.

En deçà de 1%, l'efficacité de la rigole 5 d'écoulement gravitaire est trop diminuée, et au-delà de 20%, la dimension longitudinale de la cuve 2 doit être trop réduite. A partir de 10%, la dimension longitudinale de la cuve 2 peut être avantageuse, et la gamme de 1% à 5% offre un bon rapport entre la capacité à créer un flux dans la rigole 5 pour évacuer des particules et la dimension longitudinale de la cuve 2.

Typiquement, la rigole 5 d'écoulement présente une pente de 2% qui optimise les deux caractéristiques précitées.

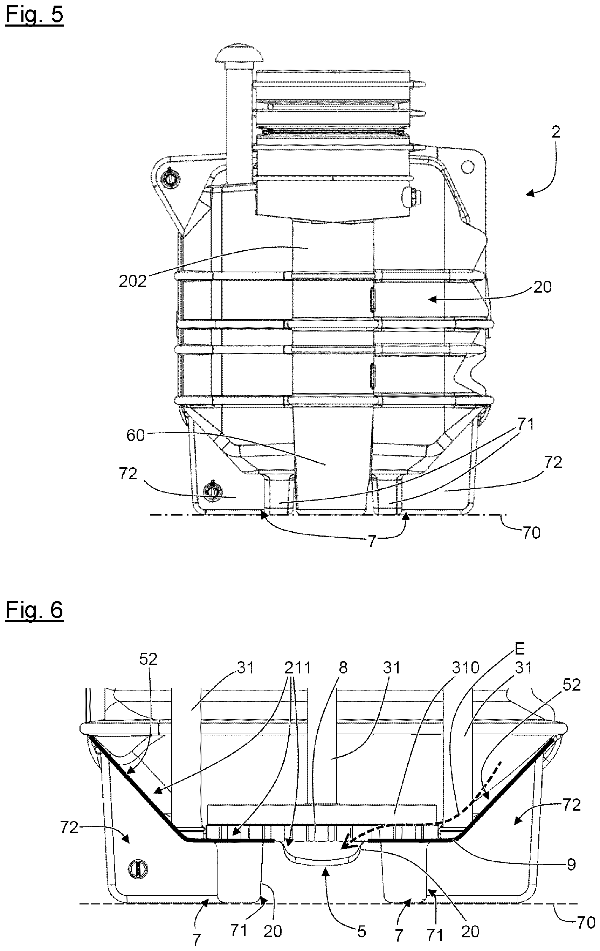

Plus spécifiquement en référence à la figure 6, la rigole 5 d'écoulement gravitaire présente une section transversale comprenant une portion centrale encadrée de deux portions latérales.

Les portions latérales présentent, depuis l'extérieur de la section de la rigole vers la portion centrale, une partie externe arrondie vers l'intérieur de la cuve (c'est-à-dire définissant une concavité ouverte vers l'extérieur de la cuve), suivie d'une partie de transition présentant un arrondi vers l'extérieur de la cuve (c'est-à-dire définissant une concavité ouverte vers l'intérieur de la cuve) formant une transition entre la partie externe et la portion centrale de la rigole 5.

À l'interface entre la partie externe et la partie de transition, la section transversale de la rigole 5 présente une tangente tendant à approcher la verticale. Ceci tend à faire « chuter » un flux d'eau vers la portion centrale de la rigole 5.

La portion centrale de la rigole 5 d'écoulement, tel que cela peut être constaté, présente une forme tendant à s'aplatir, c'est-à-dire présentant un rayon de courbure plus important que celui présenté par exemple par l'arrondi de la partie de transition.

Il est envisageable qu'une partie de la portion centrale soit strictement plane, notamment une partie qui serait centrée sur la portion centrale.

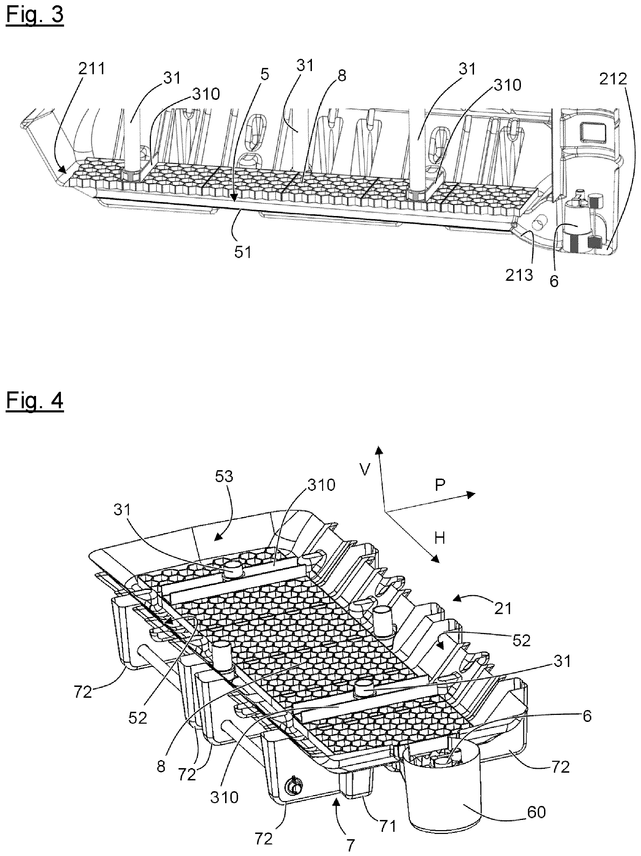

Tel que cela est visible sur les figures 1 à 6, et plus spécifiquement sur la figure 4, le fond 21 et notamment la section de collecte 211 présentent une forme rectangulaire avec une grande longueur et une petite largeur.

Sur la figure 4, une repère spatial formé par un trièdre est représenté, et présente :
- un axe horizontal H ;
- un axe vertical V s'étendant perpendiculairement à l'axe horizontal H ;
- un axe de profondeur P (s'étendant également horizontalement), perpendiculaire à l'axe horizontal H et à l'axe vertical V.

Selon ce repère, le fond 21 s'étend en longueur le long de l'axe horizontal H en présentant la section de collecte 211 puis la section de relevage 212.

La rigole 5 d'écoulement s'étend le long de l'axe horizontal H.

La rigole 5 d'écoulement présente ainsi une longueur importante au regard de la surface du fond 21 projetée dans un plan horizontal.

Tel que cela est visible sur les figures, la rigole 5 d'écoulement est centrée dans la section de collecte 211.

Tel qu'illustré par la figure 6, la rigole 5 d'écoulement présente une section transversale bombée vers l'extérieur de la cuve 2. Cette forme permet à la rigole 5 de mieux résister à des contraintes extérieures et d'accélérer la vitesse d'écoulement ce qui évite l'accumulation de résidus dans le fond du dispositif.

En référence aux figures 2 à 4, la cuve 2 présente un déversoir 213 à l'interface entre la section de collecte 211 et la section de relevage 212, et plus précisément à l'extrémité la plus basse de la rigole 5 d'écoulement, vers la section de relevage 212.

Le déversoir 213 présente une section longitudinale en arc de cercle accélérant la vitesse d'un flux d'eau au sortir de la rigole 5 d'écoulement gravitaire.

En référence aux figures 1 à 5, la partie secondaire 202 de la cuve 2 présente une forme sensiblement cylindrique et présente à sa partie basse un logement 60 tronconique, avec une section diminuant vers la section de relevage 212, pour accueillir la pompe 6.

En d'autres termes, la section de relevage 212 correspond à la surface en forme de disque à la base du logement 60 tronconique.

Ce logement 60 tronconique est adapté à la pompe 6 de relevage. La section de relevage 212 présente notamment un diamètre correspondant à l'encombrement sur le sol de la pompe 6 de relevage, avec une marge permettant l'insertion de la pompe 6.

La forme tronconique permet de maximiser le regroupement des eaux filtrées à relever au niveau de la pompe, au-dessus de la section de relevage 212, et la résistance de cette partie de la cuve 2, tout en présentant une partie secondaire 202 facilitant la maintenance de la pompe 6 de relevage (par exemple pour son insertion/extraction) grâce au diamètre plus important au-dessus de la partie tronconique.

En référence aux figures 3, 4, et 6, la section de collecte 211 comprend deux pans 52 d'écoulement gravitaire qui encadrent la rigole 5 d'écoulement gravitaire. Tel que cela est visible sur la figure 6, chaque pan 52 d'écoulement gravitaire est incliné en direction de la rigole 5 d'écoulement gravitaire.

Selon un mode de réalisation envisagé, non représenté, ces pans 52 d'écoulement gravitaire bordent directement la rigole 5 d'écoulement en s'étendant le long de la rigole 5.

La section de collecte 211 comprend également un pan avant 53 d'écoulement gravitaire également incliné vers la rigole 5, et situé à l'opposé de la section de relevage 212 par rapport à la rigole 5 d'écoulement.

Selon le présent mode de réalisation, et tel que cela est détaillé par la suite, la section de collecte 211 comprend des rebords intercalés entre la rigole 5 et les pans 52 d'écoulement gravitaire.

En référence aux figures 4, 5, et 6, le dispositif 1 comprend un piétement 7 pour la cuve 2.

Ce piétement 7 délimite un plan de pose 70 de la cuve 2.

Tel que cela peut être remarqué, la base du logement 60 est au niveau de ce plan de pose 70, permettant ainsi à la section de relevage 212 d'être à la hauteur la plus basse de la surface interne du fond, tout en ne dépassant pas la hauteur du plan de pose 70.

Selon le présent mode de réalisation, ce piétement 7 est formé par la coque 20 rigide de la cuve 2.

Le piétement 7 comprend, toujours selon le présent mode de réalisation :
- deux poutres 71 ;
- des raidisseurs 72.

Tel qu'évoqué précédemment, et en référence aux figures 5 et 6, chaque poutre 71 est formée par la coque 20 rigide qui présente une section en U au niveau de la poutre 71.

Ces poutres 71 s'étendent longitudinalement le long de la section de collecte 211, et notamment le long de la rigole 5.

Les poutres 71 présentent, sur leur longueur, et à partir du plan de pose 70 qu'elles participent à former, des créneaux 711 renforçant leur résistance structurelle et permettant le passage des fourches d'un chariot de levage.

Les raidisseurs 72 s'étendent transversalement aux poutres 71. Ils présentent également une surface inférieure externe participant à former le plan de pose 70.

Ces raidisseurs 72 sont formés par la coque 20 rigide et participent à la résistance structurelle de la cuve 2.

Ces poutres 71 et ces raidisseurs 72 forment des anfractuosités vers l'extérieur par rapport au volume interne de la cuve 2. Néanmoins, ils ne forment pas de espaces susceptibles d'encrassement.

En effet, tel qu'illustré par la figure 6, le dispositif 1 comprend, selon le présent mode de réalisation, des membranes 9 liées partiellement à la coque 20 rigide.

Ces membranes 9 sont étanches, et sont par exemple collées sur la coque 20 rigide au niveau des rebords et des pans 52 d'écoulement gravitaire.

Les anfractuosités formées par les poutres 71 et les raidisseurs 72 peuvent être remplies, par exemple avec du sable ou de l'eau.

Les membranes 9 forment partiellement la surface interne du fond 21 de la cuve 2. En effet, les membranes 9 sont couplées à la coque 20 rigide en étant tendues au-dessus des anfractuosités formées notamment par les poutres 71 et les raidisseurs 72.

Tel que cela est représenté sur la figure 6 par la flèche E, de l'eau filtrée par l'étage de filtration 4 peut s'écouler le long de la membrane 9 jusqu'à la rigole 5 d'écoulement gravitaire.

Selon un mode de réalisation envisageable, le dispositif 1 pourrait ne comprendre qu'une unique membrane, qui serait par exemple également collée dans la rigole 5 d'écoulement gravitaire.

La ou les membranes 9 sont par exemple formées en caoutchoucs EPDM (sigle de éthylène-propylène-diène monomère).

Le piétement 7 ménage un espace au-dessus du plan de pose 70 dans lequel s'étend la rigole 5 d'écoulement gravitaire.

Cet espace est notamment formé entre les deux poutres 71.

La hauteur du piétement 7, et ainsi des poutres 71, permet à la rigole 5 d'écoulement gravitaire de présenter une pente optimisée pour former un flux d'eau vers la section de relevage.

Selon le présent mode de réalisation et en référence aux figures 2, 3, 4, et 6, le dispositif 1 comprend un plancher 8 drainant.

Le plancher 8 drainant peut par exemple être formé par une grille en nids d'abeille avec des alvéoles verticales auquel est couplé un feutre géotextile autorisant l'écoulement de l'eau filtrée. Ce plancher 8 drainant est réalisé par exemple en polyéthylène.

Ce plancher 8 drainant surplombe la rigole 5 d'écoulement gravitaire. A cet effet, le plancher 8 drainant prend appui de part et d'autre de la rigole 5 d'écoulement gravitaire, sur les rebords intercalés entre la rigole 5 et les pans 52 d'écoulement gravitaire.

Bien que cela ne soit pas représenté, la présence du plancher 8 drainant ne limite pas l'écoulement d'eau filtrée depuis les pans 52 d'écoulement gravitaire jusque dans la rigole 5. En effet, le dispositif comprend des moyens ad hoc permettant à l'eau filtrée s'écoulant le long des pans 52 d'écoulement gravitaire de passer le plancher drainant. Ces moyens peuvent par exemple prendre la forme de cales surélevant le plancher 8 drainant des rebords, ou d'une mousse filtrante présentant une armature lui permettant de soutenir le plancher 8 filtrant, ou d'une combinaison des cales et d'un surplus du feutre géotextile du plancher 8 drainant.

Tel que cela est visible plus précisément sur la figure 6, le plancher 8 drainant ménage un volume libre entre lui et la rigole 5 d'écoulement gravitaire.

Le dispositif 1 comprend encore des renforts verticaux 31 logés dans la cuve 2 et prenant appui sur le fond 21 et sur la paroi supérieure 23 de la cuve 2 qui surplombe le fond 21.

Deux des renforts verticaux 31 prennent appui sur le fond 21 par l'intermédiaire du plancher 8 drainant. Plus précisément, chaque renfort vertical 31 est couplé sur une traverse 310 s'étendant transversalement sur le plancher 8 drainant, parallèlement à l'axe de profondeur P, tel qu'illustré par la figure 4.

Le dispositif 1 précédemment décrit est utilisé pour former des installations d'assainissement non collectif qui est également un objet de l'invention.

Une telle installation comprend :
- une fosse ménagée dans un sol ;
- le dispositif 1 inséré dans la fosse ;
- un matériau de remblaiement.

La fosse ménagée dans le sol doit présenter une hauteur suffisante pour permettre l'insertion de la cuve 2, tout en laissant émerger de la surface du sol environnant les regards et une cheminée d'aération.

Cette fosse doit présenter une base plane sur laquelle le dispositif de filtration, et plus spécifiquement la cuve 2, repose par l'intermédiaire du piétement 7.

Cette base plane peut notamment être formée par un radier.

Enfin, le matériau de remblaiement est utilisé pour remplir la fosse, autour du dispositif 1 de filtration. Ce matériau de remblaiement peut par exemple correspondre à une partie de la terre issue du décaissement de la fosse.

Le dispositif 1 de filtration et l'installation précédemment décrite présentent une capacité importante à résister à un encrassement grâce au fond de la cuve 2 qui permet de chasser aisément, en direction de la pompe de relevage pour évacuation, des particules non filtrées susceptibles de créer un encrassement, sous l'effet d'un flux d'eau filtrée.

Cette solution produit ses effets dès que de l'eau s'écoule dans la cuve de filtration, et ne nécessite pas une intervention ponctuelle d'un opérateur humain dans la cuve pour l'initier.

Lors de l'entretien annuel de l'installation, un éventuel dépôt de matière sur le fond est aisément évacué par l'injonction d'eau via un tuyau rigide qui traverse le média filtrant, grâce à la rigole 5 d'écoulement gravitaire et à sa pente. À titre indicatif, les cuves à fond plat selon l'art antérieur ne permettent pas cette possibilité, qui entraîne un encrassement du fond de la cuve et un déclassement de la qualité du rejet.

## Revendications

1. Dispositif (1) de filtration d'installation d'assainissement non collectif pour la filtration d'eaux usées, le dispositif (1) comprenant :
- une cuve (2) de filtration préfabriquée comprenant un fond (21) présentant une surface interne (210) à la cuve (2), la cuve s'étendant en hauteur par rapport au fond, la cuve (2) de filtration étant formée à partir d'une coque (20) rigide en matériau plastique et/ou composite ;
- au moins un étage de filtration (4) situé dans la cuve (2) de filtration ;
- une pompe (6) de relevage installée dans la cuve (2) de filtration ;
**caractérisé en ce que** la surface interne du fond (21) comprend :
- une section de relevage (212) sur laquelle est installée la pompe (6) de relevage ;
- une section de collecte (211) comprenant au moins une rigole (5) d'écoulement gravitaire s'étendant longitudinalement vers la section de relevage (212),
la section de relevage (212) étant située en hauteur plus bas que la section de collecte (211)
et **en ce qu'**il comprend un piétement (7) pour la cuve (2), le piétement (7) délimitant un plan de pose (70) de la cuve (2) et ménageant un espace au-dessus du plan de pose (70) dans lequel s'étend la rigole (5) d'écoulement gravitaire, le piétement étant formé par la coque (20) rigide de la cuve (2).

2. Dispositif (1) selon la revendication précédente, **caractérisé en ce que** la section de collecte (211) comprend deux pans (52) d'écoulements gravitaire encadrant la rigole (5) d'écoulement gravitaire, chaque pan (52) d'écoulement gravitaire étant incliné en direction de la rigole (5) d'écoulement gravitaire.

3. Dispositif (1) selon l'une quelconque des revendications précédentes, **caractérisé en ce qu'**il comprend un plancher (8) drainant surplombant la rigole (5) d'écoulement gravitaire.

4. Dispositif (1) selon la revendication précédente **caractérisé en ce que** le plancher (8) drainant ménage un volume libre entre lui et la rigole (5) d'écoulement gravitaire.

5. Dispositif (1) selon l'une quelconque des revendications 4 et 5, **caractérisé en ce que** le plancher (8) drainant repose sur la section de collecte (211) de part et d'autre de la rigole (5) d'écoulement gravitaire,
et **en ce que** la rigole (5) d'écoulement gravitaire présente une section transversale bombée vers l'extérieur de la cuve (2).

6. Dispositif (1) selon l'une quelconque des revendications précédentes, **caractérisé en ce qu'**il comprend des renforts verticaux (31) logés dans la cuve (2) et prenant appui sur le fond (21) et sur une paroi supérieure (23) de la cuve (2) qui surplombe le fond (21).

7. Dispositif (1) selon les revendications 6 et 7, **caractérisé en ce qu'**au moins une partie des renforts verticaux (31) prend appui sur le fond (21) par l'intermédiaire du plancher (8) drainant.

8. Dispositif (1) selon l'une quelconque des revendications précédentes, **caractérisé en ce que** le fond (21) de la cuve (2) comprend au moins une membrane (9) liée au moins partiellement à la coque (20) rigide, et formant au moins partiellement la surface interne du fond (21) de la cuve (2).

9. Installation d'assainissement non collectif, comprenant :
- une fosse ménagée dans un sol et présentant une base plane ;
- un dispositif (1) de filtration selon l'une quelconque des revendications précédentes, reposant sur la base plane ;
- un matériau de remblaiement remplissant la fosse autour du dispositif (1) de filtration.
